# EUROPÄISCHE PATENTSCHRIFT

(11) **EP 2 605 377 B1**
(45) Veröffentlichungstag und Bekanntmachung des Hinweises auf die Patenterteilung: **01.04.2020**
(21) Anmeldenummer: 12196919.0
(22) Anmeldetag: 13.12.2012
(51) Int. Cl.: H02K 3/52, H02K 15/095

(54) **Verfahren und Vorrichtung zur Herstellung eines Stators sowie Stator**
Device and method for producing a stator and stator
Procédé et dispositif de fabrication d'un stator et stator

(30) Priorität: 14.12.2011 DE 102011088527
(43) Veröffentlichungstag der Anmeldung: 19.06.2013
(73) Patentinhaber: Metabowerke GmbH, 72622 Nürtingen (DE)
(72) Erfinder: Schmohl, Michael, 72119 Ammerbuch (DE); Ebner, Felix, 73033 Göppingen (DE); Flöte, Enrico, 72636 Frickenhausen-Linsenhofen (DE)
(74) Vertreter: Schmid, Wolfgang

(56) Entgegenhaltungen:
- EP-A1- 0 932 243
- EP-A1- 1 768 231
- DE-A1-102007 029 741
- GB-A- 941 010
- US-A- 4 291 455

## Beschreibung

Die Erfindung betrifft ein Verfahren zur Herstellung eines Stators.

Statoren werden in elektrischen Antrieben bzw. Elektromotoren eingesetzt, die neben einem Stator auch einen Rotor umfassen. Eine übliche Anwendung solcher elektrischer Antriebe findet sich bei Haushaltsgeräten und Elektrowerkzeugmaschinen. Dabei werden in der Regel zweipolige Statoren eingesetzt.

Ein zweipoliger Stator für einen elektrischen Antrieb, insbesondere einen Elektromotor, mit einem entsprechenden Rotor weist in der Regel eine geschlossene Statorwand mit zwei einander gegenüberstehenden, paarweise angeordneten Polhörnern bzw. Polspitzen auf. Innerhalb dieser Polhörner ist der Rotor des elektrischen Antriebs angeordnet, welcher sich um eine Drehachse innerhalb des Stators rotatorisch bewegt. Somit wird der maximale Außendurchmesser des Rotors im Wesentlichen durch den Abstand der Polhörner voneinander bestimmt, während der Außendurchmesser des Stators die Baugröße des Elektromotors vorgibt.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß) für eine möglichst komfortable Handhabung der Elektrowerkzeugmaschine eine gewisse Größe nicht überschreiten. Aus diesem Grund ist es seit langem eine Aufgabe im Zusammenhang mit derartigen Elektrowerkzeugmaschinen, dieses Fadenmaß zu reduzieren.

Der Stator weist einen Spulenraum auf, der eine Anzahl von Spulennuten, in der Regel vier Spulennuten, umfasst, die von den jeweiligen Polhörnern und der Statorwand des zweipoligen Stators begrenzt werden. In diese Spulennuten wird üblicherweise ein aus Kupfer bestehender Draht bzw. werden aus einem solchen gefertigte Feldspulen eingelegt.

Elektrische Antriebe mit einem solchen zweipoligen Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Kupferdraht des Spulendrahts ab und stellt dabei sicher, dass der elektrische Antrieb ausreichend Leistung abgeben kann ohne zu überhitzen.

Grundsätzlich fallen in einem elektrischen Antrieb verschiedene Arten von Verlusten an, die in Summe die Verlustleistung bilden, welche die zur Verfügung stehende Nutzleistung des Antriebs verringert. Neben der gewünschten Leistung sind es folglich die Verluste (und die zulässige Erwärmung) eines elektrischen Antriebs, welche dessen Größe, d.h. dessen Abmessungen bestimmen. Allgemein lassen sich die Verluste in materialabhängige Verluste (Kupferverluste, Eisenverluste) und materialunabhängige Verluste unterteilen, wobei letztere vornehmlich von der Konstruktion des Antriebs abhängen. So ist es beispielsweise notwendig, Reibungsverluste innerhalb des Antriebs möglichst gering zu halten. Zudem können Strömungsverluste einer Luftströmung innerhalb des Antriebs die Luftkühlung und somit die Leistung verringern.

Eine entscheidende Anforderung, die seit Jahren an den elektrischen Antrieb von beispielsweise Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und dadurch zu einer Abrasion des Spulendrahts führen können.

Um diesem Problem zu begegnen ist es aus der Praxis bekannt, handeingelegte, vorgewickelte Spulen vor dem Einlegen in den Spulenraum mit einer Bandage und/oder Isolierpapier zu umwickeln. Dabei ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten- und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann.

Ein solches automatisiertes Verfahren zum Einlegen von Kupferdraht in Form einer Feldspule in den Spulenraum zwischen Polhörnern und Statorwand eines zweipoligen Stators ist beispielsweise aus der EP 1 225 679 A1 bekannt.

Es ist bekannt, die Enden des Spulendrahts bei direkt bewickelten Statoren mit sogenannten Terminals zu versehen, auf welche Litzen mit Steckverbindern aufgebracht werden. Alternativ ist es denkbar, die Wickeldrähte bzw. Spulendrähte als Anschlussdrähte direkt mit Steckverbindern oder mit Aderendhülsen für Push-in-Kontakte zu versehen. Derartige Anschlussdrähte von direkt bewickelten Statoren sollten jedoch vor abrasiver Beschädigung und elektrischen Überschlägen geschützt werden. Aus der Praxis ist es bekannt, zur elektrischen und/oder mechanischen Isolierung von Drähten Schrumpfschläuche vorzusehen. Hierzu wird beispielhaft auf die US 4,291,455 A, die ein Verfahren zur Herstellung eines Stators nach dem Oberbegriff des Anspruchs 1 offenbart, verwiesen. Des Weiteren ist die Verwendung von Glasgewebeschläuchen über Verbindern bekannt. Die EP1 768 231 A beschreibt schließlich eine Lösung für die Isolation eines Anschlussabschnitts des Spulendrahts im Bereich der freien Enden des Spulendrahts.

Ausgehend davon liegt der vorliegenden Erfindung die Aufgabe zugrunde, den Abrasionsschutz und die elektrische Isolierung eines Stators im Bereich seiner Anschlussdrähte weiter zu verbessern.

Diese Aufgabe wird erfindungsgemäß durch ein Verfahren zur Herstellung eines Stators mit einem Statorkörper und wenigstens einer daran angebrachten Spule mit den Merkmalen des Anspruchs 1 gelöst. Vorteilhafte Ausgestaltungen der Erfindung sind ferner in den Ansprüchen 2 bis 9 beschrieben.

Durch die Verwendung eines Hülsenelements oder eines Schlauchelements welches über dem Anschlussdraht angebracht ist und axial nicht außerhalb des Stators endet bzw. in diesen sozusagen eingeschoben ist, wird eine optimale Isolierung und ein Schutz vor leitfähigen Ablagerungen erreicht. Sonach ist keine elektrisch gefährdete offene Übergangsstelle von der Verdrahtung zur Statorspule vorhanden. Dadurch ergibt sich auch unter extremen Umweltbedingungen eine höhere Lebensdauer. Das erfindungsgemäße Verfahren kann ferner die folgenden Verfahrensschritte aufweisen:
- Einlegen wenigstens eines Platzhalterelements in den Spulenraum des Stators in der Weise, dass sich beim automatisierten Einlegen des Spulendrahts in den Spulenraum im Bereich wenigstens eines Endabschnitts des Spulendrahts in der Wicklungsstruktur ein durch das wenigstens eine Platzhalterelement begrenzter Hohlraum ergibt,
- Automatisiertes Einlegen des Spulendrahts in den Spulenraum,
- Entfernen des wenigstens einen Platzhalterelements aus der Wicklungsstruktur der Spule,
- Aufbringen des Schlauchelements oder des Hülsenelements auf den wenigstens einen Endabschnitt des Spulendrahts und Einführen des Schlauchelements oder des Hülsenelements in den verbleibenden Hohlraum in der Wicklungsstruktur der Spule, und
- Fixieren des Schlauchelements oder des Hülsenelements in der Wicklungsstruktur der Spule.

Durch die Verwendung eines Platzhalters beim direkten Wickeln des Stators ergibt sich ein Hohlraum bzw. Öffnung in der Wicklungsstruktur, in welche das Schlauchelement oder das Hülsenelement in vorteilhafter Weise eingebracht werden kann. Sonach wird bei gleichzeitiger hoher Packungsdichte eine optimale Isolierung und ein Schutz der Anschlussdrähte vor leitfähigen Ablagerungen erreicht.

Vorteilhaft ist es, wenn der automatisiert eingelegte Spulendraht mittels eines Fixiermittels fixiert wird. Der automatisiert eingelegte Spulendraht kann dazu als Backlackdraht ausgebildet sein und durch Verbacken zumindest annähernd fixiert werden.

Das Schlauchelement oder das Hülsenelement kann mittels eines Schlauchfixiermittels in der Wicklungsstruktur der Spule fixiert werden. Das Schlauchelement kann ein Schrumpfschlauch oder ein Glasgewebeschlauch sein.

Das wenigstens eine Platzhalterelement kann ein Stift und/oder ein Teil einer Wickelschablone sein.

Weiterhin kann das automatisierte Einlegen des Spulendrahts mit Hilfe eines rotierenden Wickelarms erfolgen.

Ferner kann der Stator mehrteilig ausgebildet sein und in dessen jeweilige Statorsegmente ein Spulendraht eingelegt werden, wobei in einem weiteren Schritt die Statorsegmente vorzugsweise mit einem zusätzlichen Statorfixiermittel stoffschlüssig miteinander verbunden werden können.

Der vorzugsweise zweipolige Stator kann zweiteilig ausgeführt sein und die Statorsegmente durch zwei Statorhälften gebildet werden.

Vorteilhaft ist es, wenn das zusätzliche Statorfixiermittel gleichzeitig als Schlauchfixiermittel und/oder als Fixiermittel für den eingelegten Spulendraht verwendet wird. Sonach muss lediglich ein Fixiermittel eingesetzt werden.

Das Schlauchfixiermittel und/oder das zusätzliche Statorfixiermittel kann Klebstoff oder Träufelharz, vorzugsweise ein dual härtendes Harz umfassen. Durch die Kapillarwirkung werden sämtliche Bereiche und Zwischenräume des Stators erreicht.

Nachfolgend ist anhand der Zeichnung prinzipmäßig ein Ausführungsbeispiel der Erfindung beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und oder zu anderen sinnvollen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4: eine Detailansicht einer Verbindungsstelle eines Stators gemäß Figuren 1 und 2;
- Figur 5a: eine Detailansicht einer Statorhälfte mit einem Temperatursensorelement in einer ersten Ausführungsform;
- Figur 5b: eine Detailansicht einer Statorhälfte mit einem Temperatursensorelement in einer zweiten Ausführungsform;
- Figur 6: eine Wickelschablone, welche bei einem Wickelvorgang eines erfindungsgemäßen Stators verwendet werden kann;
- Figur 7: in einer Ansicht von der Außenseite her eine in eine Statorhälfte eingesetzte Wickelschablone nach einem Wickelvorgang;
- Figur 8: in einer isometrischen Ansicht einen mit einer Beschichtung versehenen Stator; und
- Figur 9: eine Schnittdarstellung des in Figur 8 gezeigten Stators.

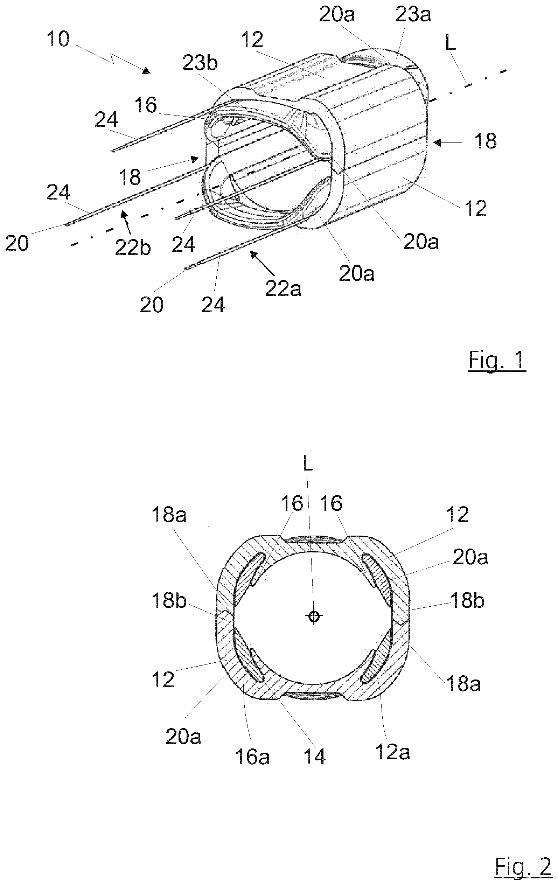

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement vorgesehen sein.

Wie in Figur 2 deutlich zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

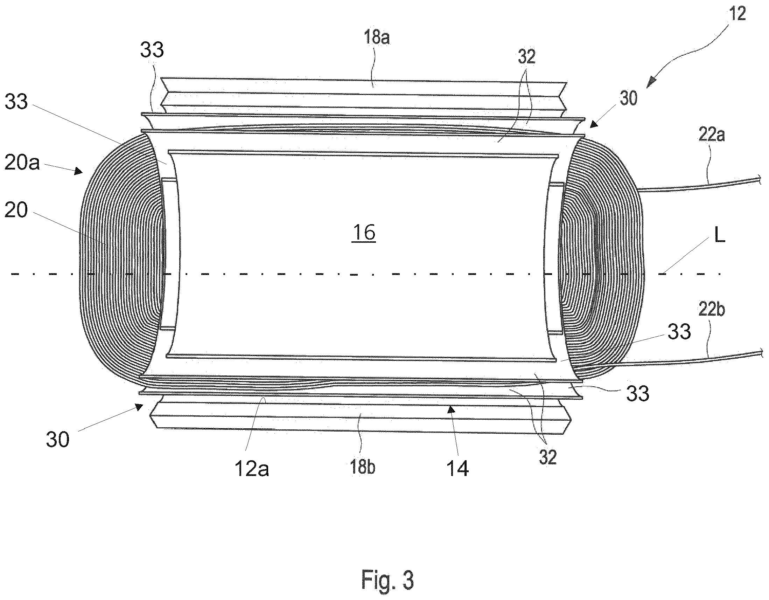

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Darin ist eine Besonderheit der vorliegenden Erfindung zu sehen, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

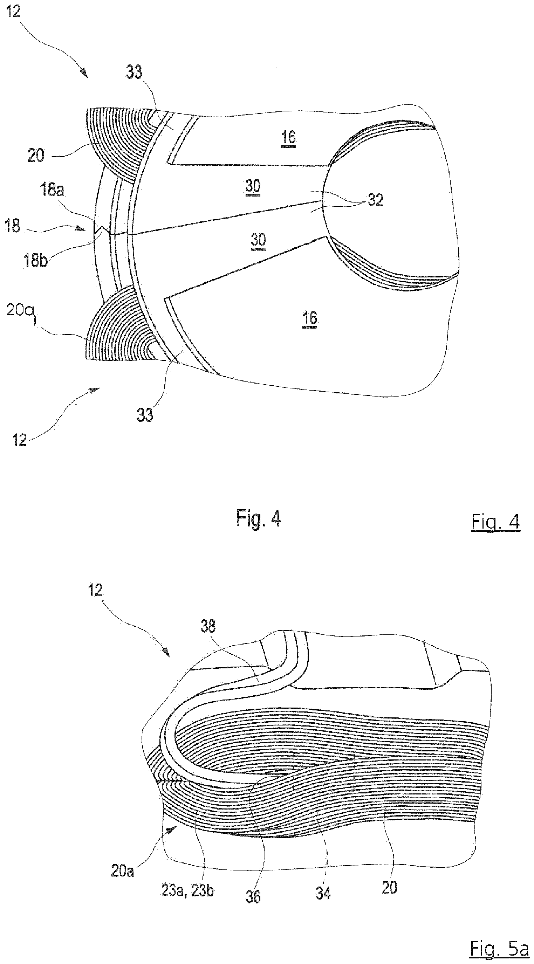

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier 30 mit einem radialen Überstand 32 (vgl. auch Figur 4) über die jeweiligen Polhörner 16 hinaus vorgesehen ist.

Als radialer Überstand 32 wird der Teil des Isolierpapiers 30 verstanden, der bezogen auf die Längsachse L radial, d.h. in einer Richtung senkrecht zu der Längsachse L, über die Polhörner 16 übersteht.

Dabei kann der Überstand 32 des Isolierpapiers 30, wie in Figur 4 gezeigt, derart gewählt sein, dass zumindest die radial innenliegenden Abschnitte des überstehenden Isolierpapiers 32 dann, wenn die Statorhälften 12 zusammengesetzt sind, d. h. im Bereich ihrer Verbindungsstellen 18 aneinander anliegen, die Überstände 32 des Isolierpapiers 30 der beiden Statorhälften 12 ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

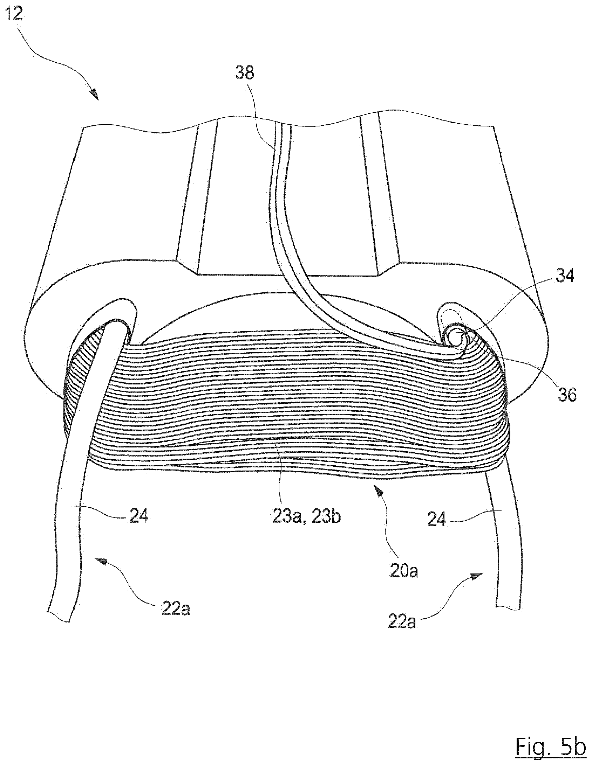

Wie aus Figur 5a ersichtlich, ist ein gestrichelt angedeutetes Temperatursensorelement 34 in einer Aussparung bzw. einem Hohlraum 36 in der Wicklungsstruktur der Spule 20a vorhanden, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in Figur 5a lediglich die Anschlussleitungen 38 aus der Spule herausragen. Das Temperatursensorelement 34 kann nur in eine oder auch in beide Statorhälften 12 eingebracht werden. Wie aus Figur 5b ersichtlich, kann das Temperatursensorelement 34 alternativ auch in einem Hohlraum 36 in wenigstens einer der Spulennuten 14 untergebracht sein. Dazu kann das Temperatursensorelement 34 zwischen der Spule 20a einerseits und der Statorwand und/oder einem der Polhörner 16 andererseits angeordnet sein.

Eine weitere Besonderheit der vorliegenden Erfindung ist darin zu sehen, dass die beiden Drahtenden bzw. Drahtendabschnitte 22a, 22b, welche beim Wickelvorgang von der Spule 20a an den Statorhälften 12 entstehen, wie vorstehend erwähnt als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist dabei, wie bereits vorstehend beschrieben, einen radialen Überstand 32 über die Polspitzen 16 der jeweiligen Statorhälften 12 hinaus auf. Dieser Überstand 32 kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

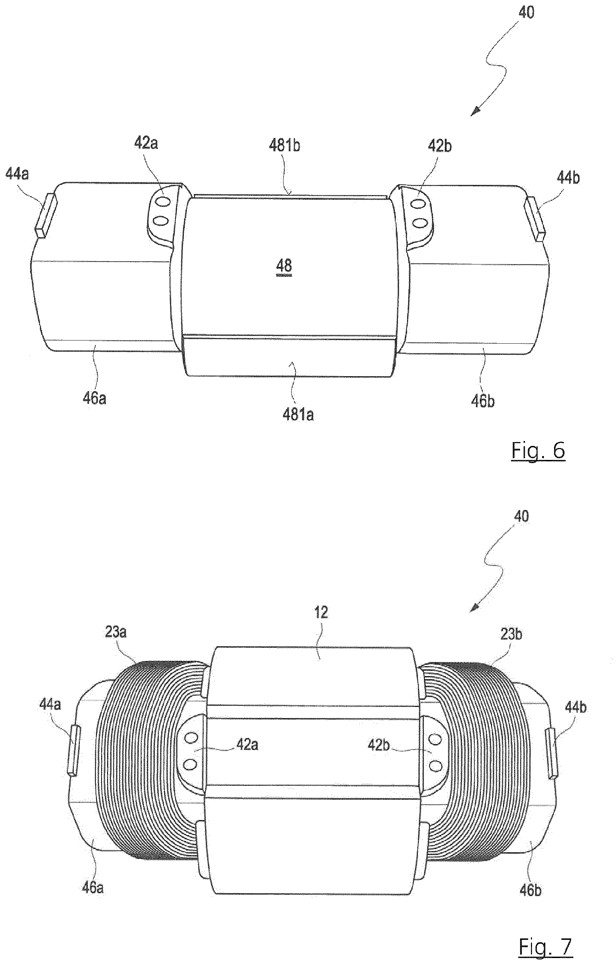

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine wie in Fig. 6 dargestellte Wickelschablone 40 verwendet werden. Die Wickelschablone 40 zeigt dabei ein näherungsweise halbzylindrisches Mittelstück 48, an dessen Stirnseiten jeweils die beiden von diesem am Umfang etwas abgesetzten Schablonenenden 46a und 46b angeordnet sind. Dabei ist das Mittelstück 48 dazu vorgesehen, von der Innenseite her auf eine Statorhälfte 12 aufgesetzt zu werden, wobei es mittels der Schablonenenden 46a und 46b auf dieser in Axialrichtung zentriert wird. Das Mittelstück 48 zeigt dabei die Anlagenflächen 481a und 481b, welche bei eingesetzter Wickelschablone 40 über die Polhörner der Statorhälfte überstehen und so eine zusätzliche temporäre Nut schaffen, in welcher der Spulendraht 20 gewickelt werden kann, wobei er dort während und nach dem Wickelvorgang mittels der Wickelschablone 40 in dieser temporären Nut geführt und gehalten wird.

Ferner zeigt die in Fig. 6 dargestellte Wickelschablone 40 auf ihren Schablonenenden 46a und 46b jeweils einen äußeren Fortsatz 44a, 44b und einen inneren Fortsatz 42a, 42b. Zwischen den Fortsätzen 42a und 44a bzw. 42b und 44b kann beim Wickelvorgang der Spulendraht 20 ebenfalls geführt bzw. angeordnet werden, so dass sich über die Statorhälfte 12 hinausstehend ein Wickelkopf mit einer definierten Form ergibt. Im Unterschied zum Stand der Technik kann also durch die Verwendung der Wickelschablone 40 einerseits erreicht werden, dass auch Bereiche außerhalb der Nut 14 mit Spulendraht 20 gefüllt werden und andererseits auch, dass eine definierte Form eines Wickelkopfes geschaffen werden kann.

Fig. 7 zeigt in einer Ansicht von der Außenseite her die in der Statorhälfte 12 eingesetzte Wickelschablone 40 nach dem Wickelvorgang. Gut erkennbar ist die definierte Ausbildung der Wickelköpfe 23a, b, welche durch die Fortsätze 42a, 44a und 42b, 44b erreicht werden kann. Ansonsten entsprechen die in der Fig. 7 verwendeten Bezugszeichen den bereits in der Fig. 6 verwendeten.

Bevor diese Schablone wieder entnommen wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In diesem Verfahrensschritt, in dem die einzelnen Drahtwindungen zu einer Spule 20a verbacken werden, kann auch der Überstand 32 des Isolierpapiers 30 an die Spule 20a angebacken werden. Dabei kann das Isolierpapier 30 hierfür ebenfalls eine Backlackbeschichtung zumindest im Bereich seines Überstands 32 auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Ein nicht dargestelltes Platzhalterelement, insbesondere ein Stift oder dergleichen kann in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a oder in wenigstens einer der Spulennuten 14 ergibt. Nach dem Entfernen des Platzhalterelements aus der Wicklungsstruktur der Spule 20a oder aus der wenigstens einen Spulennut 14 kann in den verbleibenden Hohlraum 36 das Temperatursensorelement 34 eingeführt werden.

Die Wickelschablone 40 ist beispielsweise derart ausgebildet, dass in einem Bereich der gewickelten Spule 20a die entsprechende Ausnehmung bzw. der Hohlraum 36 verbleibt, in den in einem weiteren Prozessschritt das Temperatursensorelement 34 in die gewickelte Spule 20a eingeführt werden kann. Alternativ kann das von der Wickelschablone separate Platzhalterelement verwendet werden. Das Temperatursensorelement 34 wird in dem wenigstens einen Hohlraum 36 der Spule 20a fixiert. Dies kann mittels des Fixiermittels für den Spulendraht 20 erfolgen. Alternativ ist es jedoch ebenfalls denkbar, das Temperatursensorelement 34 direkt an der Backlackbeschichtung des Spulendrahts 20 zu verbacken oder mit Hilfe eines zusätzlichen separat aufzubringenden Sensorfixiermittels an der Spule 20a zu fixieren. Dazu kann das Temperatursensorelement 34 wenigstens teilweise mit dem Sensorfixiermittel beschichtet werden. Das Platzhalterelement und damit auch der Hohlraum 36 kann im Bereich des Wickelkopfes 23a, b oder in einer der Spulennuten 14 zwischen der Spule 20a einerseits und der Statorwand und/oder einem der Polhörner 16 andererseits vorgesehen werden. Das zusätzliche Sensorfixiermittel kann z. B. Klebstoff, Träufelharz oder Backlack umfassen.

Darüber hinaus kann ein vorstehend genanntes Platzhalterelement in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend wird der Schrumpfschlauch 24 mittels eines Schlauchfixiermittels in der Wicklungsstruktur der Spule 20a fixiert. Das Schlauchfixiermittel kann Klebstoff oder Träufelharz, vorzugsweise ein dual härtendes Harz umfassen.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

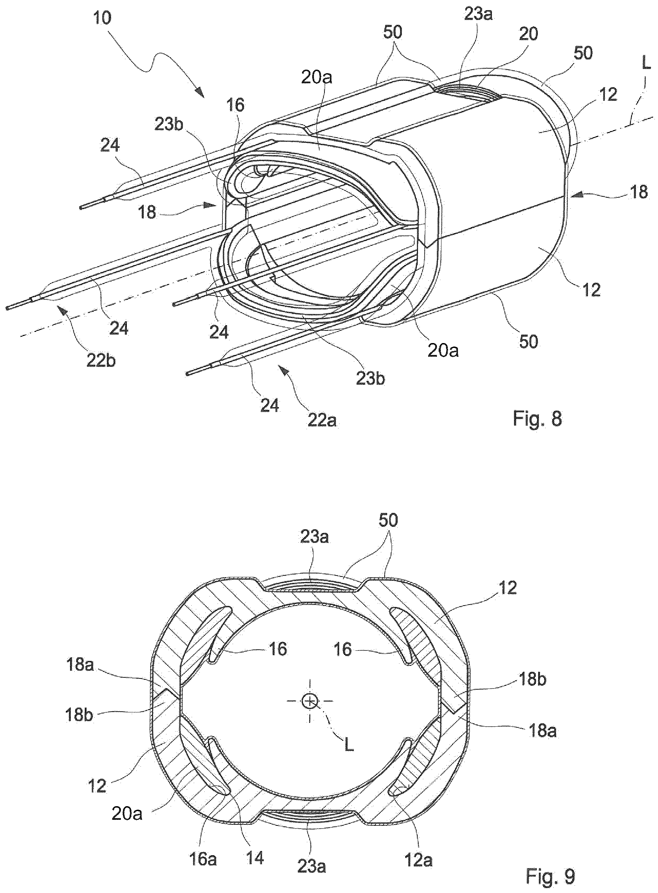

In den Figuren 8 und 9 ist ein Stator 10 gezeigt, welcher wie vorstehend beschrieben mittels einer Tauchimprägnierung beschichtet wurde. Grundsätzlich sind auch andere Beschichtungsverfahren zur Erzeugung des beschichteten Stators 10 wie bspw. Besprühen denkbar. Die in den Figuren 8 und 9 verwendeten Bezugszeichen entsprechen weitgehend den bereits in den Figuren 1 und 2 verwendeten.

Fig. 8 zeigt in einer isometrischen Ansicht einen Stator 10, bei welchem die Wickelköpfe 23a und 23b mit der gemeinsamen Beschichtung 50 versehen sind. Gut erkennbar in Fig. 8 ist, dass die gemeinsame Beschichtung 50 im vorliegend gezeigten Ausführungsbeispiel den Statorkörper an seiner Innen- und Außenseite sowie die Wickelköpfe 23a und 23b wie auch die mit dem Schrumpfschlauch 24 versehenen Drahtenden 22a, 22b bedeckt. Es wird also im vorliegenden Ausführungsbeispiel über den gesamten Stator 10 hinweg eine durchgängige Beschichtung 50 ausgebildet, welche sämtliche Komponenten wirksam schützt und aufgrund ihrer Ausbildung als gemeinsame Beschichtung keine harten Absätze oder Übergänge ausbildet, an welchen abrasiv wirkende Partikel in der vorbeiströmenden Luft angreifen könnten.

Fig. 9 zeigt in einem zur Achse L senkrechten Schnitt den Verlauf der Beschichtung 50. Gut erkennbar aus Fig. 9 ist, dass die Beschichtung 50 im Bereich des Statorkörpers etwas dünner ausgebildet ist als im Bereich der Wickelköpfe 23a. Die dickere Beschichtung im Bereich der Wickelköpfe 23a ist insbesondere auch deswegen vorteilhaft, weil diese in der Regel am stärksten einem abrasiv wirkenden Partikelstrom in der Kühlluft ausgesetzt sind.

Der in den Figuren 8 und 9 gezeigte Stator 10 kann nachfolgend in ein Motorgehäuse (nicht gezeigt) eingesetzt werden.

## Patentansprüche

1. Verfahren zur Herstellung eines Stators (10) mit einem Statorkörper und wenigstens einer daran angebrachten Spule (20a), welche durch ein automatisiertes Einlegen von Spulendraht (20) mit mehreren Wicklungen in einen Spulenraum des Stators (10) gebildet wird, wobei der Spulenraum eine Anzahl von Spulennuten (14) umfasst, die von Polhörnern (16) und einer Statorwand des Stators (10) begrenzt werden,
wobei wenigstens ein Endabschnitt (22a,22b) des Spulendrahts (20) als Anschlussdraht derart mit einem Hülsenelement oder einem Schlauchelement (24) versehen wird, dass das Hülsenelement oder das Schlauchelement (24) in die Wicklungsstruktur der Spule (20a) hineinragt, **gekennzeichnet durch** die folgenden Verfahrenschritte:
- Einlegen wenigstens eines Platzhalterelements in den Spulenraum des Stators (10) in der Weise, dass sich beim automatisierten Einlegen des Spulendrahts (20) in den Spulenraum im Bereich wenigstens eines Endabschnitts (22a,22b) des Spulendrahts (20) in der Wicklungsstruktur der Spule (20a) ein durch das wenigstens eine Platzhalterelement begrenzter Hohlraum ergibt,
- Automatisiertes Einlegen des Spulendrahts (20) in den Spulenraum,
- Entfernen des wenigstens einen Platzhalterelements aus der Wicklungsstruktur der Spule (20a),
- Aufbringen des Schlauchelements (24) oder des Hülsenelements auf den wenigstens einen Endabschnitt (22a,22b) des Spulendrahts (20) und Einführen des Schlauchelements (24) oder des Hülsenelements in den verbleibenden Hohlraum in der Wicklungsstruktur der Spule (20a), und
- Fixieren des Schlauchelements (24) oder des Hülsenelements in der Wicklungsstruktur der Spule (20a).

2. Verfahren nach Anspruch 1,
**dadurch gekennzeichnet, dass** der automatisiert eingelegte Spulendraht als Backlackdraht (20) ausgebildet ist und durch Verbacken fixiert wird.

3. Verfahren nach Anspruch 1 oder 2,
**dadurch gekennzeichnet, dass** das Schlauchelement (24) oder des Hülsenelement mittels eines Schlauchfixiermittels in der Wicklungsstruktur der Spule (20a) fixiert wird.

4. Verfahren nach einem der Ansprüche 1 bis 3,
**dadurch gekennzeichnet, dass** das wenigstens eine Platzhalterelement ein Stift und/oder ein Teil einer Wickelschablone (40) ist.

5. Verfahren nach einem der Ansprüche 1 bis 4,
**dadurch gekennzeichnet, dass** das automatisierte Einlegen des Spulendrahts (20) mittels eines rotierenden Wickelarms erfolgt.

6. Verfahren nach einem der Ansprüche 1 bis 5,
**dadurch gekennzeichnet, dass** der Stator (10) mehrteilig ausgebildet ist und in dessen jeweilige Statorsegmente (12) ein Spulendraht (20) eingelegt wird, wobei in einem weiteren Schritt die Statorsegmente (12) vorzugsweise mit einem zusätzlichen Statorfixiermittel stoffschlüssig miteinander verbunden werden.

7. Verfahren nach Anspruch 6,
**dadurch gekennzeichnet, dass** der vorzugsweise zweipolige Stator (10) zweiteilig ausgeführt ist und die Statorsegmente durch zwei Statorhälften (12) gebildet werden.

8. Verfahren nach Anspruch 6 oder 7,
**dadurch gekennzeichnet, dass** zusätzliche Statorfixiermittel als Schlauchfixiermittel verwendet wird.

9. Verfahren nach einem der Ansprüche 3 bis 8,
**dadurch gekennzeichnet, dass** das Schlauchfixiermittel und/oder das zusätzliche Statorfixiermittel Klebstoff oder Träufelharz umfasst.

## Claims

1. Method for producing a stator (10) with a stator body and at least one coil (20a) attached thereto, which is formed by an automated insertion of coil wire (20) with a plurality of windings into a coil space of the stator (10), wherein the coil space comprises a number of coil grooves (14), which are defined by pole horns (16) and a stator wall of the stator (10),
wherein at least one end portion (22a, 22b) of the coil wire (20) is provided with a sleeve element or a tube element (24) as a connecting wire in such a way that the sleeve element or the tube element (24) projects into the winding structure of the coil (20a),
**characterised by** the process steps:
- insertion of at least one spacer element into the coil space of the stator (10) in such a way that, during the automated insertion of the coil wire (20) into the coil space, a cavity delimited by the at least one spacer element is produced in the winding structure of the coil (20a) in the region of at least one end section (22a, 22b) of the coil wire (20),
- automatic insertion of the bobbin wire (20) into the bobbin space,
- removing the at least one placeholder element from the winding structure of the coil (20a),
- applying the tubular element (24) or the sleeve element to the at least one end portion (22a, 22b) of the coil wire (20) and inserting the tubular element (24) or the sleeve element into the remaining cavity in the winding structure of the coil (20a), and
- fixing the hose element (24) or the sleeve element in the winding structure of the coil (20a).

2. Method according to claim 1,
**characterised in that** the automatically inserted coil wire is formed as a self-bonding wire (20) and is fixed by baking.

3. Method according to claim 1 or 2,
**characterized in that** the hose element (24) or the sleeve element is fixed in the winding structure of the coil (20a) by means of a hose fixing means.

4. Method according to any one of claims 1 to 3,
**characterised in that** the at least one spacer element is a pin and/or part of a winding template (40).

5. Method according to any one of claims 1 to 4,
**characterised in that** the automatic insertion of the coil wire (20) is effected by means of a rotating winding arm.

6. Method according to one of claims 1 to 5,
**characterised in that** the stator (10) is constructed in several parts and a coil wire (20) is inserted into its respective stator segments (12), wherein in a further step the stator segments (12) are preferably connected to one another with a material bond, preferably with an additional stator fixing means.

7. Method according to claim 6,
**characterised in that** the preferably two-pole stator (10) is constructed in two parts and the stator segments are formed by two stator halves (12).

8. Method according to claim 6 or 7,
**characterised in that** additional stator fixing means are used as tube fixing means.

9. Method according to any one of claims 3 to 8,
**characterised in that** the tube fixing agent and/or the additional stator fixing agent comprises adhesive or trickle resin.

## Revendications

1. Procédé de fabrication d'un stator (10) avec un corps de stator et au moins une bobine (20a) fixée sur celui-ci, qui est formé par une insertion automatisée de fil de bobine (20) avec plusieurs enroulements dans un espace de bobine du stator (10), l'espace de bobine comprenant un certain nombre de rainures de bobine (14), qui sont définies par des cornes polaires (16) et une paroi de stator du stator (10),
dans lequel au moins une partie d'extrémité (22a, 22b) du fil de bobine (20) est munie d'un élément de manchon ou d'un élément de tube (24) comme fil de connexion de telle sorte que l'élément de manchon ou l'élément de tube (24) fait saillie dans la structure d'enroulement de la bobine (20a),
**caractérisé par** les étapes du processus :
- insertion d'au moins un élément d'écartement dans l'espace de bobine du stator (10) de telle sorte que, lors de l'insertion automatisée du fil de bobine (20) dans l'espace de bobine, un espace creux délimité par le au moins un élément d'écartement est produit dans la structure d'enroulement de la bobine (20a) dans la zone d'au moins une section d'extrémité (22a, 22b) du fil de bobine (20),
- insertion automatique du fil de la bobine (20) dans l'espace de la bobine,
- retirer le ou les éléments de maintien de la structure d'enroulement de la bobine (20a),
- appliquer l'élément tubulaire (24) ou l'élément de manchon sur la au moins une partie d'extrémité (22a, 22b) du fil de bobine (20) et insérer l'élément tubulaire (24) ou l'élément de manchon dans la cavité restante de la structure d'enroulement de la bobine (20a), et
- fixer l'élément de tuyau (24) ou l'élément de manchon dans la structure d'enroulement de la bobine (20a).

2. Méthode selon la revendication 1,
**caractérisé en ce que** le fil de bobinage inséré automatiquement est formé comme un fil auto-collant (20) et est fixé par cuisson.

3. Méthode selon la revendication 1 ou 2,
**caractérisé en ce que** l'élément de tuyau (24) ou l'élément de manchon est fixé dans la structure d'enroulement de la bobine (20a) au moyen d'un moyen de fixation de tuyau.

4. Méthode selon l'une des revendications 1 à 3,
**caractérisé en ce que** l'élément d'espacement au moins est une broche et/ou une partie d'un gabarit d'enroulement (40).

5. Méthode selon l'une des revendications 1 à 4,
**caractérisé en ce que** l'insertion automatique du fil de bobinage (20) est effectuée au moyen d'un bras de bobinage rotatif.

6. Méthode selon l'une des revendications 1 à 5,
**caractérisé en ce que** le stator (10) est construit en plusieurs parties et un fil de bobine (20) est inséré dans ses segments de stator respectifs (12), dans lequel, dans une étape ultérieure, les segments de stator (12) sont de préférence reliés les uns aux autres par une liaison de matière, de préférence avec un moyen de fixation de stator supplémentaire.

7. Méthode selon la revendication 6,
**caractérisé en ce que** le stator (10), de préférence bipolaire, est construit en deux parties et les segments de stator sont formés par deux moitiés de stator (12).

8. Méthode selon la revendication 6 ou 7,
**caractérisé en ce que** des moyens supplémentaires de fixation du stator sont utilisés comme moyens de fixation des tubes.

9. Méthode selon l'une des revendications 3 à 8,
**caractérisé en ce que** l'agent de fixation du tube et/ou l'agent de fixation supplémentaire du stator comprend de la résine adhésive ou de la résine de ruissellement.
